# EUROPEAN PATENT SPECIFICATION

(11) **EP 2 051 205 B1**
(45) Date of publication and mention of the grant of the patent: **14.03.2012**
(21) Application number: 07020327.8
(22) Date of filing: 17.10.2007
(51) Int. Cl.: G06T 7/00

(54) **Method, computer program and workstation for removing undesirable objects for a digital medical image**
Verfahren, Computerprogramm und Arbeitsstation zum Entfernen ungewünschter Objekte aus einem digitalen medizinischen Bild
Procédé, programme informatique et station de travail pour supprimer les objets indésirables d'une image médicale numérique

(43) Date of publication of application: 22.04.2009
(73) Proprietor: Deutsches Krebsforschungszentrum, 69120 Heidelberg (DE)
(72) Inventor: Schöbinger, Max, 69124 Heidelberg (DE); Wolf, Ivo, Dr., 69257 Wiesenbach (DE); Meinzer, Hans-Peter, Prof. Dr., 69117 Heidelberg (DE)
(74) Representative: Liesegang, Eva

(56) References cited:
- US-A1- 2005 195 189
- SELLE D ET AL: "Analysis of vasculature for liver surgical planning" IEEE TRANSACTIONS ON MEDICAL IMAGING, IEEE SERVICE CENTER, PISCATAWAY, NJ, US, vol. 21, no. 11, November 2002 (2002-11), pages 1344-1357, XP002250046 ISSN: 0278-0062
- HORST K HAHN ET AL: "A Minimally-Interactive Watershed Algorithm Designed for Efficient CTA Bone Removal" COMPUTER VISION APPROACHES TO MEDICAL IMAGE ANALYSIS LECTURE NOTES IN COMPUTER SCIENCE;;LNCS, SPRINGER BERLIN HEIDELBERG, BE, vol. 4241, 2006, pages 178-189, XP019045581 ISBN: 978-3-540-46257-6

## Description

The present invention relates to a method of removing undesirable objects from a digital medical image, as well as to a computer program and a work station configured to implement such method.

In medical imaging, it is often desired to only visualize some regions of interest among a total image as obtained from a medical imaging apparatus. For example, in computed tomography angiography (CTA), one often wishes to obtain a virtual 3D image of the blood vessels only, while the surrounding tissue, organs and bones are to be omitted from the image. In CTA, a contrast agent which absorbs X-rays is injected to the blood circulation. Then, an angiographic CT data set shows the openings within the vascular structures carrying the blood as bright structures due to the contrast agent contained therein. Since the radio density of the blood carrying the contrast agent is very different from the radio density of the surrounding tissue, it is possible to partition the digital image into a part corresponding to the blood vessels and the part corresponding to the surrounding tissue and to keep only the former part for further processing. This partitioning is usually called "segmentation".

However, with further reference to the example of angiography, such segmentation may fail to distinguish between the blood filled vessels and bones, since the bones and the blood provided with the contrast agent will have similar radio densities. Consequently, after the segmentation, the image will show bones in addition to the blood vessels, and bones typically obstruct the interpretation of the image of the vessel. As such, the bones are examples of undesirable or obstructing objects which are to be removed from the image. In the present document, the term "image" has a broad meaning, and in particular, it may refer both to viewable images that are displayed at a display device as well as to data representing a viewable image. Other examples for undesirable structures are artifacts such as metal implants, or parenchymatic regions such as the liver or the kidneys which also contain contrast agent and accordingly generate bright structures in the X-ray images. Similar problems arise for example in magnetic resonance tomography, where vessels appear bright in the corresponding image.

Since bones are the prime example of such undesirable objects in medical images, related prior art methods are commonly known as "bone removal methods". A first class of prior art bone removal methods is based on two independent CT scans, one with and one without contrast agent. Bone in the CTA images is then removed using information from the additional CT scan without contrast agent to identify voxels that represent bones. Such a method is for example disclosed in M. van Straten et al., "Automatic bone removal in CT angiography", MEDICA MUNDI; 49/1 2005, pages 4-8. However, such a method is disadvantageous due to the additional dosage exposure of the second CT scan.

In addition, there are prior art methods for automatically removing bone from single CT scans only. Some of these fully automatic methods are based on so-called atlas matching employing a general model for particular bones or local groups of bones. The bone model is then compared with the image to identify bones, which are then removed from the image. Atlas-based bone identification methods are for example known from J. Fripp et al., "Automatic segmentation of the bone and extraction of the bone-cartilage interface from magnetic resonance images of the knee", Phys. Med. Biol. 52 (2007), pages 1617-1631, and from J. Ehrhardt et al., "Atlas-based recognition of anatomical structures and landmarks in the automatic computation of orthopedic parameters", Methods Inf. Med. 4/2004, pages 391-397.

Further fully automated bone removal methods are based on filter chains comprised of a number of image processing operations applied one after the other, typically comprising region growing methods, threshold operations and morphological image processing. Such filter chains may be applied to each single layer of the CT image stack or to the whole image volume.

While such fully automated bone removal methods are very attractive from a user's point of view, in practice unfortunately, they tend to be prone to errors. In particular, they tend to fail to recognize some of the bones which accordingly will remain in the image. Since the methods are fully automated, there is no possibility to correct such deficiencies afterwards. Also, while atlas matching bone removal methods work well for single bones or small groups of bones, the computational effort for generating an atlas or statistical shape model for all bones of the human body is computationally prohibitive.

Finally, there are fully manual methods of removing bones from a medical image, in which a user marks a bone manually, for example by encircling it with a pointing device. While this method naturally provides good results, it is extremely cumbersome to perform by the user.

It is the object of the present invention to provide a method of removing undesirable objects from a digital medical image which is both, reliable and efficient to use.

This object is achieved by a method according to claim 1, by a computer program according to claim 16 and by a work station according to claim 26. Preferable embodiments are given in the dependent claims.

According to the invention, the method comprises the following steps:
A) electing by user input a site located within said undesirable object,
B) generating a symbolic representation of at least a part of the medical image, wherein said symbolic representation comprises a directed graph comprising vertices and edges, wherein each pixel or voxel of the digital medical image or at least of said part of said digital medical image is associated with an edge or vertex of the graph,
C) determining a path in the symbolic representation, said path including the edge or vertex associated with said elected site and an edge or vertex outside said undesirable object, said path propagating towards the root of said directed graph,
D) determining the part of the image associated with said determined path,
E) identifying within said determined part of the image the transition between the undesired object and the remainder of the image, and
F) identifying the part of the image associated with the branch of the graph rooted at said transition between the undesired object and the remainder of the image, and either removing said identfied part of the image from the image or removing anything but said identfied part of the image from the image.

Prior-art document, US2005/0195189 discloses a semi-automatic system for removing bone structures from medical images containing vessels and bones with some common pixels or voxels. The user must select two points, one within the bone and another within the vessels, then the computer generates a path between both selected points, an algorithm (Support Vector Machine) classifies each voxel or pixel as bone or vessel and identifies connection points between both objects. Finally, the connection and the bone pixels or voxels are removed from the image.

Herein, step B) may be performed prior to step A).

Note that in the context of this invention, the "removing" of the part of the image in step F) shall have a broad meaning. That is, the part may be completely removed from the image but it could also be displayed in a way different from the remainder of the image, such as in a different color.

The method of the invention is thus "manual" in that the user has to identify the undesirable object by electing a site located therein in step A). Also, in the preferred embodiment, in step D) the determined part of the image may be visualized, and the user may also manually identify the transition between the undesired object and the remainder of the image in step E) within the visualized part of the image (although this identification of the transition could also be done automatically). While this involves some extra effort by the user as compared to the above-mentioned fully automated methods, in practice, the user input generally amounts to two simple and quick mouse clicks only. On the other hand, the manual selection of the undesirable object has the advantage that errors which may happen with fully automated methods can be avoided. Also, the user has the liberty to keep some of the bones within the images such as to enhance the anatomic context of the image. Finally, unlike fully automated bone removal methods, the method of the invention is not limited to removing bones but more general types of undesirable objects, such as parenchymatic regions like liver or kidneys, which will also contain some amount of contrast agent, metallic artifacts or the like.

As compared to prior art manual methods of bone removal, the main difference and advantage of the invention is that the user does not edit the image on a pixel or voxel level, but on a higher order semantic level of a symbolic representation. Namely, when electing a site located within the undesirable object, according to the method of the invention in step C), a path in the symbolic representation is determined which includes the edge or vertex associated with the elected site and which also includes an edge or vertex which is not located within the undesirable object. Accordingly, the path thus generated will have a transition between the undesirable object and the remainder of the image. All that has to be done is to identify this transition, preferably by user input. To this end, in step D), the part of the image associated with said determined path is preferably visualized such that the user can inspect it and identify the transition, for example by a simple mouse click.

In the preferred embodiment, the root of said directed graph is not located within the undesirable object. In that case, the root itself may form the above-mentioned "vertex outside said undesirable object", or a vertex that is hierarchically at least closer to the root than the site located within the undesirable object elected in step A). Then, the transition is used as a root for a "branch" or "subtree" of the directed graph, and the corresponding "branch" or "subtree" is regarded to represent the undesirable object. Accordingly, in step F), the part of the image associated with said "branch" or "subtree" of the graph rooted at said transition between the undesired object and the remainder of the object is identified and removed.

It is noted that in conventional manual methods for removing undesirable objects, the difficulty was not to recognize the undesirable object, as any expert would recognize the undesirable object such as bones at a glance. The difficulty was to edit the image or, in other words, to communicate to the imaging software which part of the image belonged to the undesirable object and which did not. Namely, in conventional manual methods, the user would for example have to encircle the undesirable object by hand to identify it in a way the program can understand.

In the present invention, as mentioned before, all the user has to do is to identify the undesirable object by electing a site located therein (step A) and to possibly identify the transition between the undesired object and the remainder of the object within the above-mentioned visualized part of the image (step E). Then, the part of the image associated with the branch of the graph rooted at said transition will be removed from the image.

When the root of the directed graph is located outside the undesirable object, which is the case in the preferred embodiment of the invention, the method clearly relies on the fact that the branch of the graph rooted at the transition does in fact correspond to the undesirable object. However, it has been verified by the inventor that this is in practice almost always the case. Further explanation why the subtree rooted at the transition and the undesirable object will usually coincide will be given below with reference to a specific example.

For completeness, however, it is noted that the method can also be applied in a complementary fashion, in which the root is located within the undesired object. For example, the root of the directed graph could correspond to the vertex associated with the site elected in step A). In this case, the part of the image associated with the branch of the graph rooted at the transition between the undesired object and the remainder of the image would correspond to said remainder of the image itself. In this instance, according to the second alternative of step F) above, anything but this reminder of the image is removed from the image, that is, again the undesirable object is removed from the image.

The digital medical image may be obtained from computed X-ray tomography (CT), in particular spiral-CT, or magnetic resonance imaging or any other 3D imaging device.

Preferably, in step A) of electing said site located within said undesirable object and/or said step E) of identifying said transition between said undesirable object and the remainder of the image is performed by means of a user pointing device, such as a mouse, a trackball or keyboard keys. This allows the user to quickly and simply make the desired input.

Preferably, the method comprises a step of skeletonizing the medical image prior to the step of generating said symbolic representation. In said skeletonizing step, the image is subjected to a medial axis transform in which a three-dimensional object is reduced to a line structure, in which the topology and geometry of the image is conserved. At the same time, a so-called distance transformation is calculated in which for each object point the distance to the closest background point is assigned. In case of angiography, this value can be regarded as an estimate for the vessel diameter. The skeleton can then be used to generate the directed graph with a topology that is equivalent to the topology of the skeleton which in turn is equivalent in topology to the original object. In the present invention, the graph generated from the skeleton is a "directed graph", that is its edges are directed from one vertex to another. Such a directed graph will have a tree-like structure with a root and without cycles. In particular, first a non-directed graph may be generated from the skeleton, and then a directed graph may be generated from said non-directed graph.

In a preferred embodiment, the method comprises a step of associating each voxel of the segmentation with a corresponding element of said directed graph by means of a geodesic distance transform as it is for example known from Pierre Soille "Morphological Image Analysis - Principles and Applications", Springer, Berlin 2004.

In a preferred embodiment, the method may also comprise, prior to said step of skeletonizing, a segmentation step of partitioning an image obtained from a medical imaging apparatus into objects to be displayed and objects to be discarded. In that case, the this step of segmentation generates a "binary image" by selecting pixels or voxels of the original medical image obtained from a medical imaging apparatus that are to be included in the digital medical image and those which are to be omitted. For example, in case of CTA, in the step of segmentation, one would try to generate an image displaying the blood vessels only. In a preferred embodiment, the segmentation step comprises a so-called region growing process. In a region growing process, the segmentation is started in a starting region of the image and adjacent pixels or voxels are checked for their similarity with regard to a certain characteristic, such as the gray scale value of the CTA image. Only if a similarity criterion is met, the pixel or voxel will be added to the region. In particular, the region growing method ensures that pixels or voxels will only be added to an object if they are connected thereto. This is again especially useful in angiography, where the objects of interest are the vessels which are connected. Preferably, the root of the directed graph corresponds to the seed used for the region growing.

It is emphasized, however, that the method of the invention does not necessarily involve a segmentation step of its own. Instead, the method is generic in a sense that it can be applied to any type of binary image which can be previously obtained by any suitable segmentation method. Accordingly, the method of the invention can be employed in combination with many existing image processing programs.

As mentioned before, in a preferred embodiment, the digital medical image is an angiogram. In that case, the root of the directed graph is preferably located in the thickest vessel included in the medical image. Then, the topology of the directed graph will resemble the tree-like topology of the vascular system. Preferably, the root can be chosen by user input.

Preferably, the symbolic representation is generated in a growth process that is started at a seed site and in which consecutively edges are generated, wherein the order in which edges are generated is based on the diameter of the part of the image associated with said edge, such that edges having large corresponding diameters are generated first. In case of an angiogram, this will ensure that first the symbolic representation of the thick vessels will be generated before the method proceeds to the thinner peripheral vessels. In a directed graph, cyclic structures are to be avoided. Consequently, the graph generating process will be stopped if the graph reaches a point that has been reached before. Preferring large diameter edges in the graph generation will then ensure that the cycles will always close at the thinnest part of the vessels involved.

Also, the method of the invention can advantageously be combined with prior art automated bone removal methods. In that case, the method comprises prior to the step of generating said symbolic representation a step of applying an automated bone removal method in which some or all of the bones are removed. Then, the method allows to remove bones which were not identified in the automated bone removal method or further obstructing or undesired objects. This method combines the convenience of automated bone removal methods with the reliability and flexibility of the method of the invention.

For the purposes of promoting an understanding of the principles of the invention, reference will now be made to the preferred embodiment illustrated in the drawings and specific language will be used to describe the same. It will nevertheless be understood that no limitation of the scope of the invention is thereby intended, such alterations and further modifications in the illustrated method and such further applications of the principles of the invention as illustrated therein being contemplated as it would normally occur now or in the future to one skilled in the art to which the invention relates.
- Fig. 1: schematically shows a segmented image of an aorta and a part of the spine, the spine resembling an undesirable object.
- Fig. 2: schematically shows the symbolic representation of the aorta and the spine of fig. 1.
- Fig. 3: shows a path in the symbolic representation which includes an edge associated with a selected site within the spine and which propagates towards the root of the directed graph.
- Fig. 4: shows the same path in the symbolic representation as fig. 3, but in addition the transition point between the spine and the aorta. Also, the part of the image associated with the determined path is visualized.
- Fig. 5: shows the symbolic representation of the complete branch of the graph rooted at the transition point.
- Fig. 6: shows the part of the image associated with the branch of the graph rooted at the transition point.
- Fig. 7: shows the symbolic representation of the aorta only.
- Fig. 8: shows the final image in which the spine has been removed.

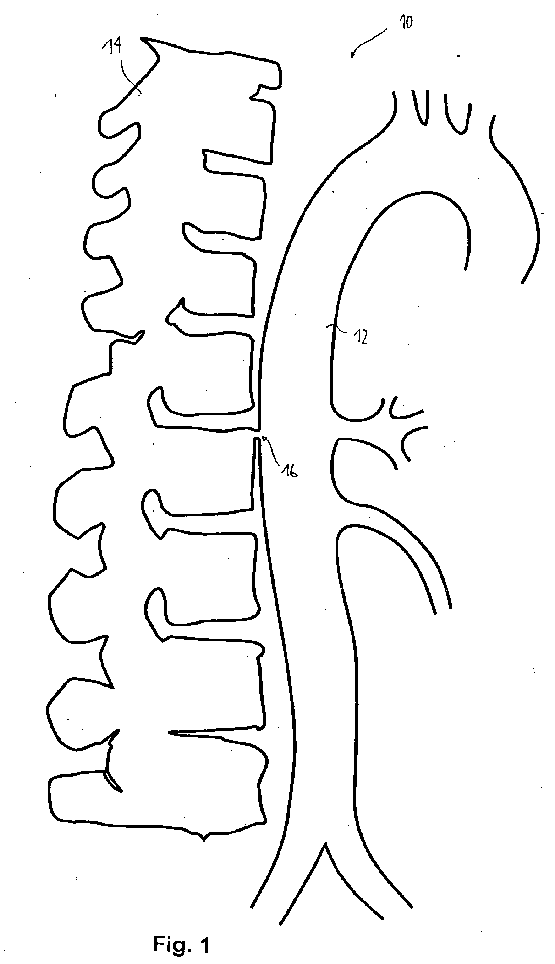

In the following, the method according to an embodiment of the invention will be described with reference to figs. 1 to 8.

Fig. 1 shows a simplified illustration of a digital medical image 10 which would for example be displayed on a computer display. While not shown in the figures, the digital image will generally be a three-dimensional image comprised of voxels.

In the exemplary embodiment shown, it is assumed that the image has been obtained by CT, where a contrast agent has been injected to the patient's vascular system. Due to the contrast agent, the aorta 12 shown in fig. 1 generates bright structures in the CTA data set, while the surrounding tissue do not. Accordingly, the image of the aorta 12 could be distinguished from the surrounding tissue and could be isolated therefrom. This type of partitioning a digital image is called segmentation.

While the aorta 12 is regarded to be the object of interest in the present example, the digital image 10 shown in fig. 1 also displays the patient's spine 14. That is, the preceding segmentation process failed to distinguish the boney spine 14 from the aorta 12 containing contrast agent, since their radio densities are similar.

In particular, it is assumed that in the present example a region growing process had been used for the segmentation of the aorta 12. Usually, when region growing is employed, only structures that are connected with each other will be selected. However, as is illustrated in fig. 1, at a position close to the truncus coeliacus, the aorta 12 and the spine 14 happen to be very close together, and due to imperfect resolution of the original image, they were mistakenly regarded to be connected at a site referenced with reference sign 16.

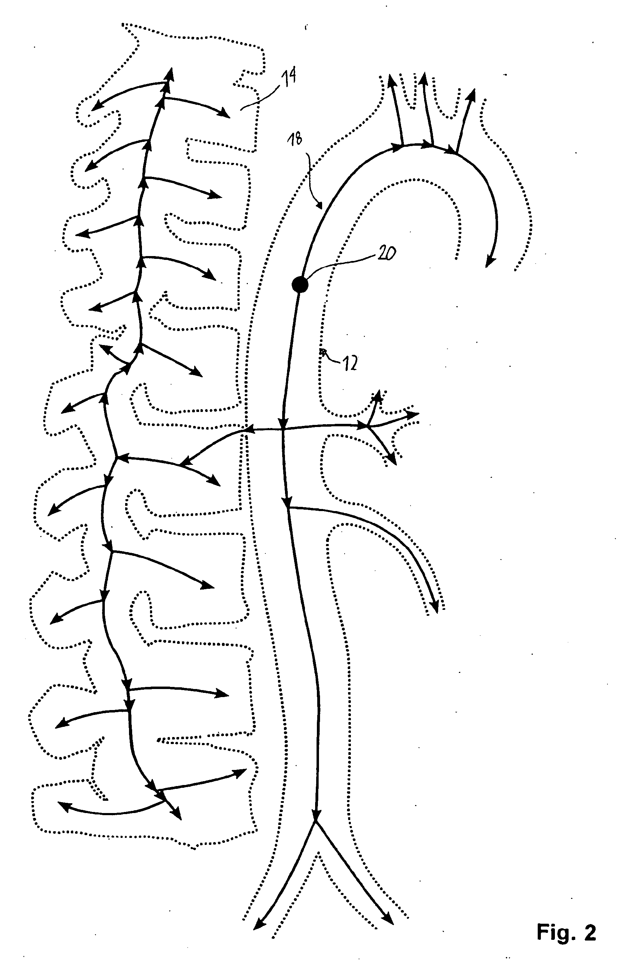

It is the object of the method of the invention to remove undesirable objects such as spine 14 from the digital medical image 10. To this end, first a symbolic representation of the medical image is generated. The symbolic representation comprises a directed graph 18 associated with the medical image, which is illustrated in fig. 2. As is seen in fig. 2, the directed graph 18 comprises vertices and edges that connect pairs of vertices. The graph is a "directed graph" in that the edges are directed from one vertex to another and accordingly are represented by arrows in fig. 2. Moreover, each voxel of the digital medical image 10 is associated with an edge of the graph 18, which is why the medical image is also indicated in fig. 2 in dotted lines. Each voxel of the digital image 10 can be associated with an element of the directed graph 18 by means of a Euclidean geodesic distance transform. The directed graph 18 is a tree-like structure with a root 20 which is located within the aorta 12.

The generation of graph 18 starts with the skeletonization of the three-dimensional image. The skeletonization is a medial axis transform of the 3D image to give a line structure that conserves the topology and geometry of the three-dimensional object. Then, starting from the root 20, graph 18 is generated edge by edge in a way for example known from Max Schöbinger: "Analyse von Gefäßstrukturen und versorgtem Gewebe" (diploma thesis, TR131), Division Medical and Biological Informatics, German Cancer Research Center, Heidelberg, Germany, 2002, Chapter 4, and Max Schöbinger et al.: "Robuste Analyse von Gefäßstrukturen auf Basis einer 3D-Skelettierung" in T. Wittenberg et al.: "Bildverarbeitung für die Medizin" 2003, pages 76-80, Springer Berlin 2003, ISBN: 3-540-00619-2.

The details of the generation of graph 18 shall not be repeated here. It is only mentioned that the graph generation method comprises a step of identifying branching points and generating edges that are leading off such branching points, where the order in which edges are generated is based on the diameter of the part of the image associated with said edge such that edges having large corresponding diameters are generated first. This implies that, when starting out at root 20, edges of the directed graph 18 that are associated with the aorta 12 will be generated first, and then edges associated with smaller vessels branching off aorta 12 will successively be generated. Since the connection or transition 16 between aorta 12 and spine 14 is extremely narrow, the corresponding edge will be generated rather late. Once the directed graph 18 has entered the spine 14, however, the diameter increases again and the directed graph will successively span the whole spine 14, as can be seen in fig. 2.

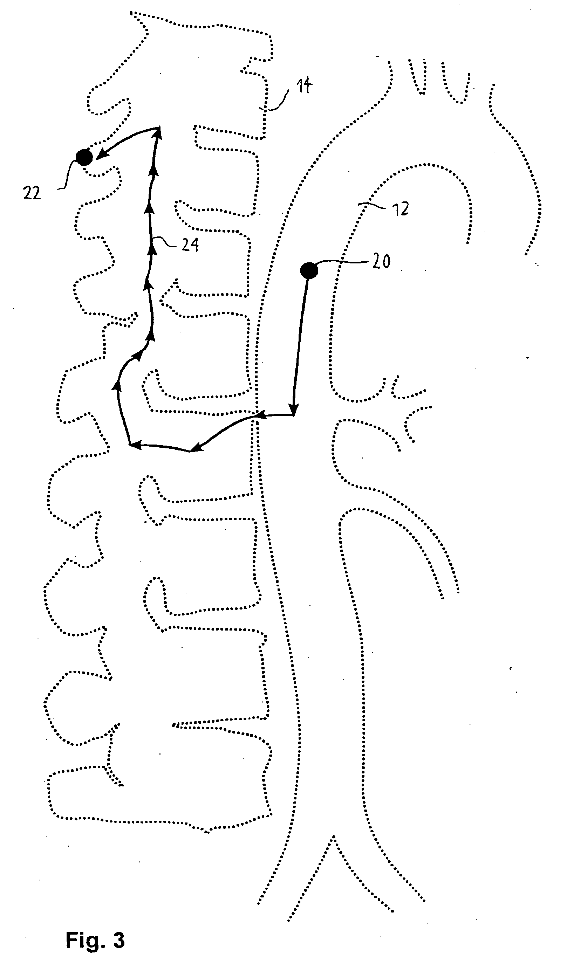

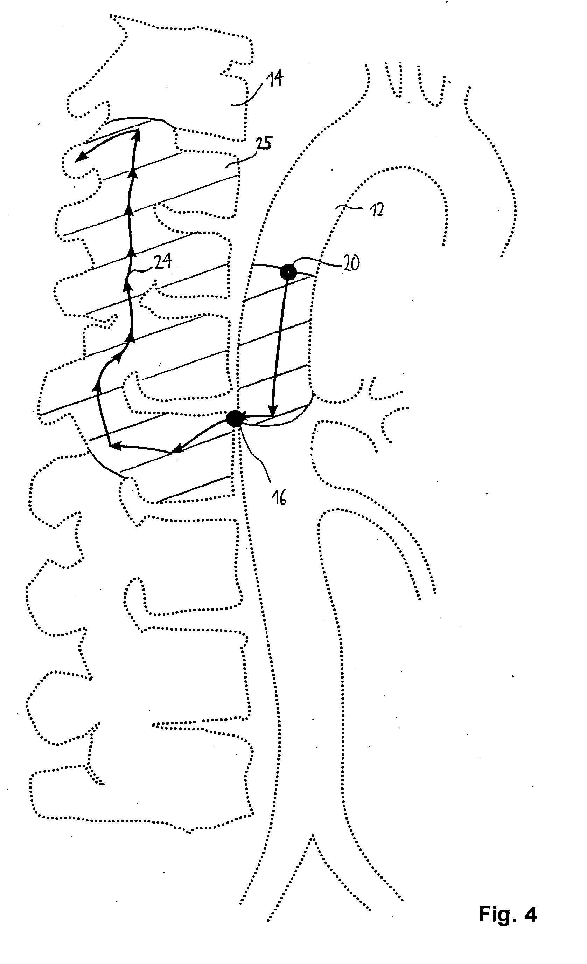

With reference to fig. 3, next a site 22 within the spine 14, which is to be removed from the image 10, is elected by user input. For example, the user can simply position a pointing device such as a mouse cursor at the respective portion of the displayed image and select this site by a simple mouse click. Thereafter, the path 24 in the symbolic representation is determined which includes the edge associated with the elected site 22 and which propagates towards the root 20 of the directed graph 18, i.e. in a direction opposite to the direction of the arrows representing the edges. All of this happens in the symbolic representation and is not yet visible to the user. However, as shown in fig. 4, in the next step, the part of the image 10 which is associated with the determined path 24 is visualized on the computer display, which is indicated by the hatched region 25 of fig. 4. Region 25 can for example be visualized by displaying it in a different color than the remainder of the image 10.

The user then inspects the visualized part 25 of the image, and he or she can easily identify the transition of this part 25 of the image between the aorta 12 and the spine 14, i.e. the site 16 already mentioned with reference to fig. 1. The user then selects this transition site 16 for example by further mouse click.

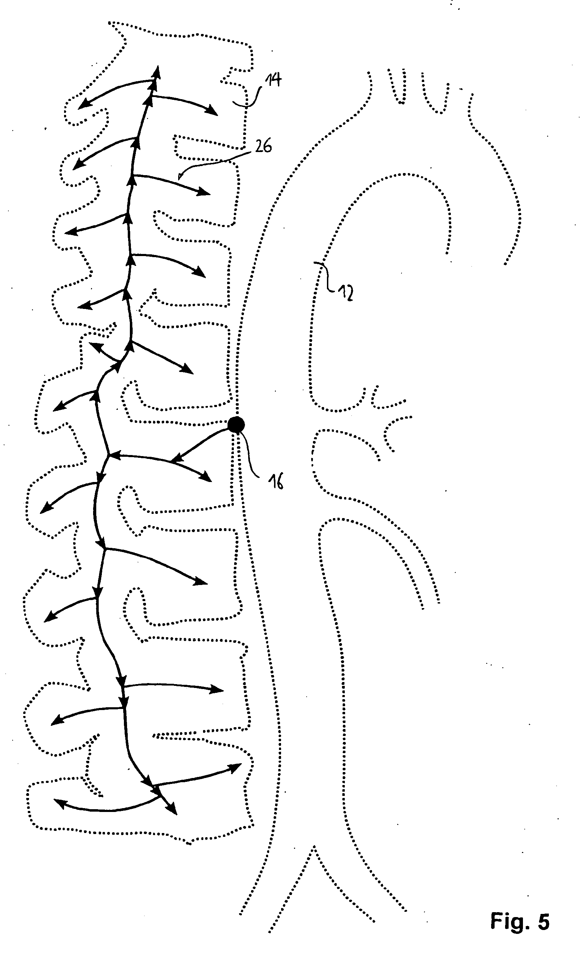

With reference to fig. 5, in the next step, a "branch" or "partial tree" 26 of the full directed graph 18 is determined which is rooted at the vertex closest to the transition site 16. Note that since the elected site 22 is located in the spine 14 (i.e. the undesirable object) and the root 20 is located in the aorta 12 (i.e. the object of interest), there will always be at least one transition 16. Also, in the example shown, there is only one connection between the spine 14 and the aorta 12, and accordingly, there is only one transition 16. This implies that the branch 26 rooted at the transition 16 must cover the whole spine 14, as is indicated in fig. 5.

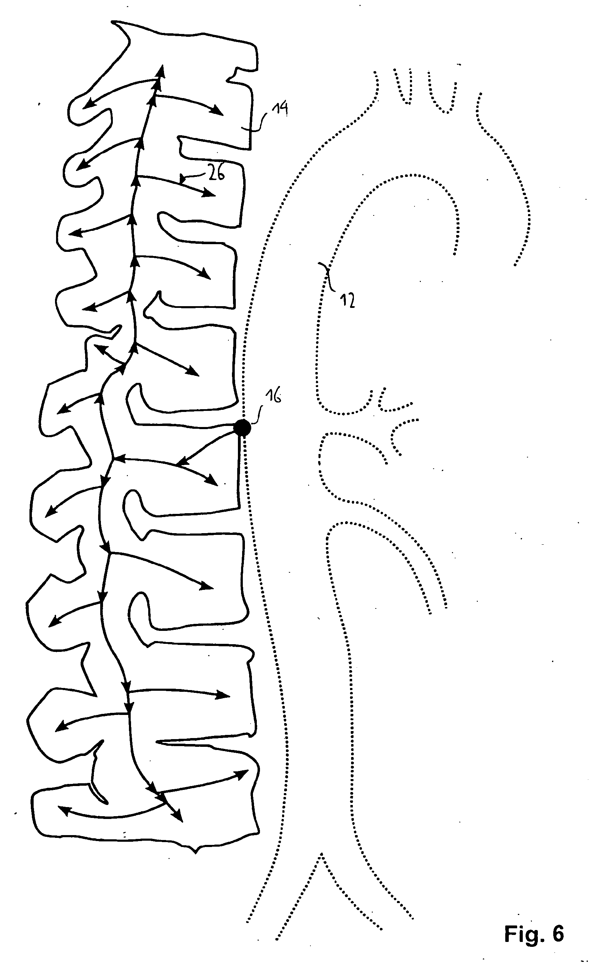

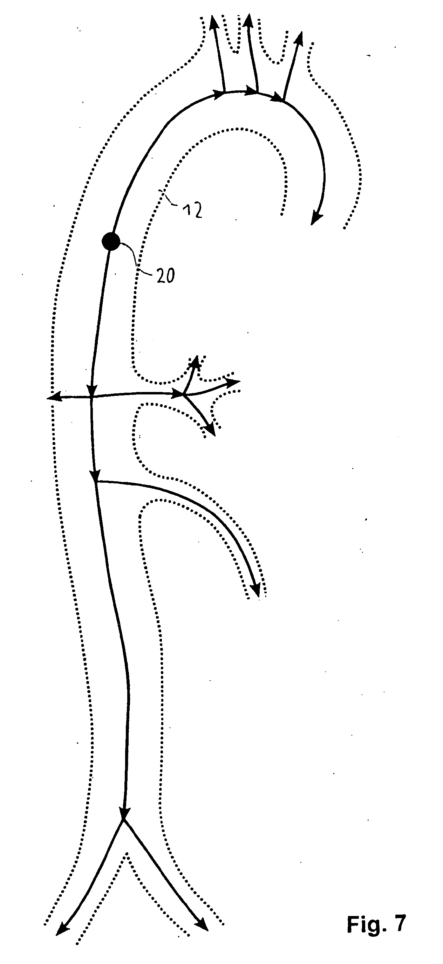

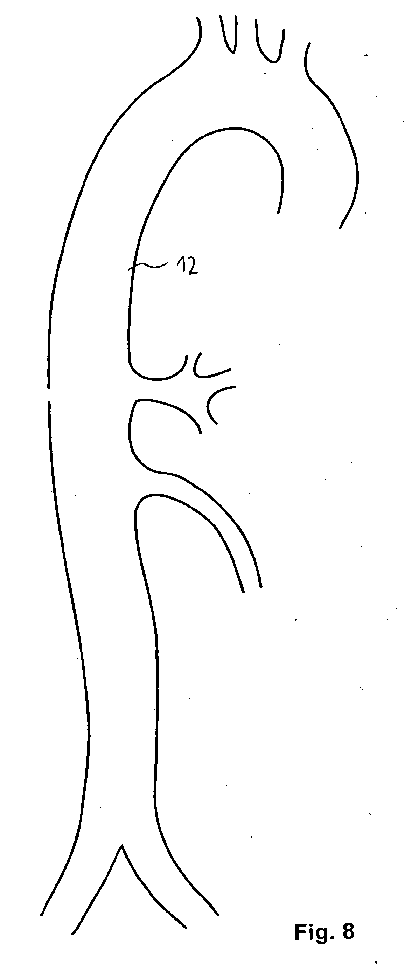

Next, with reference to fig. 6, all voxels associated with branch 26 are identified, which is indicated by the solid outline of spine 14 in the illustration of fig. 6. This is all the information that is needed to remove the spine 14 from the image 10. In particular, for removing the spine voxels from the image 10, the branch 26 can be discarded from the symbolic representation, such that only the symbolic representation of the aorta 12 will remain, as is shown in fig. 7. Then, in a final step, the image associated with the remaining symbolic representation can be constructed, as is shown in fig. 8.

As is clear from the above description, the method of removing undesirable objects from the medical image 10 is extremely easy and convenient to use. In particular, while the user actually interacts with the symbolic representation of the image, this actually remains unnoticed by the user, who simply has to select two points by mouse click on his computer screen, namely first site 22 located in the undesirable object and then transition point 16. This is very convenient as compared to prior art methods of removing undesirable objects, and unlike fully automated bone removal methods, it leaves it to the discretion of the user which objects to remove and which objects to keep. Namely, in some instances, it can be helpful to keep some bones in the image as an anatomical reference. In other instances, the method allows to remove objects other than bones, for which automatic removal methods do not exist. Finally, the method can advantageously be employed in addition to ordinary bone removal methods, such as to only remove those bones that the automated bone removal method has failed to recognize. This is facilitated by the fact that the method of the invention is generic in that it can be applied to any type of pixelized image and can thus be easily used in connection with preexisting software.

While in the exemplary embodiment the spine 14 is completely removed from the image, it may also be sufficient to "remove" it by simply displaying it in phantom or in a different color than the aorta 12. Thereby, the spine 14 and aorta 12 can be easily distinguished, and the spine 14 obstructs the view onto the aorta 12 to a lesser extent.

With reference again to fig. 6, the success of the method relies on the fact that the branch 26 rooted at transition 16 covers the whole spine 14. As mentioned before, since in the present example there is only one connection between the aorta 12 and the spine 14 and since the root 20 of the whole directed graph (see fig. 2) is located within the aorta 12, the whole spine 14 must necessarily be "hooked" to the transition 16, and the whole spine 14 can therefore necessarily be removed by removing branch 26. However, even if there are more connecting sites between the object of interest and the undesirable object, it turns out that in practice the undesirable object will usually still be represented by a branch of the directed graph which is rooted at one of the transition points.

This is especially true if, during the graph generation, edges are generated in an order according to the diameter of the corresponding image. To understand this, imagine that in the image 10 of fig. 1 a second connection between the aorta 12 and the spine 14 exists. The "connections" in the image are really artifacts due to regions where the two objects touch each other, and since the objects are generally convex, the "connections" will be rather narrow. Such narrow connections will then represent "bottle necks" in the generation of the graph, because the corresponding edges will be generated with fairly low priority. Consequently, once the graph has made one transition from the object of interest to the undesirable object, the diameter of the undesirable object increases and the graph will typically span the whole undesirable object before the second transition, i.e. the second bottle neck is passed. So even if there are two or more bridges between the object of interest and the undesirable object, the graphical representation of the undesirable object will typically be a single branch rooted at one of the transitions or bridges.

Finally, in case that the undesirable object should be represented by two distinct branches of the directed graph which are rooted at different transitions, the first application of the method will only remove a part of the undesirable object. In this instance, however, the method can simply be repeated by selecting a further site located in the remaining portion of the undesirable object and identifying the corresponding transition.

While the preferred embodiment of the method has been described above, it is noted that the method of the invention could be performed in a complementary way leading to virtually the same result. In this complementary method, the root of the directed graph would be located within the undesired object, i.e. spine 14. In this case, the vertices and edges within the spine would be hierarchically closer to the root than the vertices and edges corresponding to the aorta 12. A path connecting the root within spine 14 and a site within the aorta 12 would also pass the transition 16. In this case, however, the sub-tree or branch rooted at the transition 16 would cover the whole aorta 12, or more generally, anything but the undesirable object. So in this case, the part of the image corresponding to this sub tree or branch will be kept only, such that again, the part of the image corresponding to the spine 14 will be removed.

Again, this complementary variant of the method works especially well if during the graph generation, edges are generated in an order according to the diameter of the corresponding image. Namely, the directed graph rooted at a vertex within the undesirable object will tend to first span the whole undesirable object before it passes the bottle neck of the transition. Accordingly, it can be expected that indeed, the sub-tree rooted at the transition would correspond to anything but the undesirable object, and that in turn, only the undesirable object will be removed from the image.

The method of the invention can be implemented in a computer program which when executed on a computer instructs a processor to perform the necessary steps described herein. A further embodiment of the invention is a work station configured to perform the method steps described herein.

Although the preferred exemplary embodiment is shown and specified in detail in the drawings and the preceding specification, this should be viewed as purely exemplary and not as limiting the invention. It is noted in this regard that only the preferred exemplary embodiment is shown and specified, and all variations and modifications should be protected that presently or in the future lies within the scope of protection of the invention.

### List of reference signs

- 10: digital medical image
- 12: aorta
- 14: spine
- 16: transition site
- 18: directed graph
- 20: root of directed graph 18
- 22: selected site on undesirable object 14
- 24: path in symbolic representation including the edge associated with site 22 and propagating towards the root 20 of the directed graph
- 25: part of image 10 associated with path 24
- 26: branch of symbolic representation rooted at transition 16

## Claims

1. A method of removing undesirable objects (14) from a digital medical image (10) comprising the steps of :
A) electing by user input a site (22) located within said undesirable object (14);
B) generating a symbolic representation (18) of at least a part of the medical image (10),
- wherein said symbolic representation (18) comprises a directed graph comprising vertices and edges and having a non-cyclic structure,
- wherein each pixel or voxel of the digital medical image (10) or at least said part of the digital medical image is associated with an edge or vertex of the graph,
C) determining a path (24) in the symbolic representation (18), said path (24) including the edge associated with said elected site (22) and an edge outside said undesirable object (14), said path propagating towards the root (20) of said directed graph (18);
D) determining the part (25) of the image (10) associated with said determined path (24);
E) identifying within said determined part (25) of the image (10) a transition (16) between the undesired object (14) and the remainder (12) of the image (10);
F) identifying the part of the image (10) associated with the branch (26) of the graph (18) rooted at said transition (16) between the undesired object (14) and the remainder (12) of the image (10), and either removing said identified part of the image (10) from the image (10) or removing anything but said identified part of the image (10) from the image (10).

2. The method of claim 1, wherein the root (20) of said directed graph is not located within said undesirable object (14) and wherein in step F), said identified part of the image (10) is removed.

3. The method of claims 1 or 2, wherein in step D), the part (25) of the image (10) associated with said determined path (24) is visualized, and wherein in step E) the transition (16) between the undesired object (14) and the remainder (12) of the image (10) is identified by user input.

4. The method of one of the preceding claims, wherein said undesirable object (14) is a bone, an organ such as liver or kidneys or a metal artifact.

5. The method of one of the preceding claims, wherein said digital medical image (10) is obtained by a three-dimensional image acquisition method, and in particular from computer X-ray tomography (CT), such as spiral-CT, or magnetic resonance imaging.

6. The method of one of the preceding claims, wherein step A) of electing said site (22) located within said undesirable object (14) and/or said step E) of identifying said transition (16) between said undesirable object (14) and the remainder (12) of the image (10) is performed by means of a user pointing device.

7. The method of one of the preceding claims, further comprising a step of skeletonizing the medical image (10) prior to the step of generating said symbolic representation (18).

8. The method of one of the preceding claims, further comprising a step of associating each voxel of the medical image (10) or at least said part of the medical image with the corresponding element of said directed graph (18) by means of a geodesic distance transform.

9. The method of claim 8, further comprising, prior to said step of skeletonizing, a segmentation step of partitioning an image obtained from a medical imaging apparatus into objects to be displayed and objects to be discarded.

10. The method of claim 9, wherein said segmentation step comprises a region growing process.

11. The method of claim 10, wherein the root (20) of said directed graph (18) corresponds to the seed used for said region growing.

12. The method of one of the preceding claims, wherein said digital medical image (10) is an angiogram.

13. The method of claim 10, wherein the root of said directed graph (18) is located in the thickest vessel included in the angiogram.

14. The method of one of the preceding claims, wherein said symbolic representation (18) is generated in a growth process that is started at a seed site (20) and in which consecutively edges are generated, wherein the order in which edges are generated is based on the diameter of the part of the image associated with the respective edge such that edges having larger corresponding diameters are generated first.

15. The method of one of the preceding claims, further comprising prior to the step of generating said symbolic representation a step of applying an automated bone removal method.

16. A computer program which when executed on a computer instructs a processor to:
- generate a symbolic representation (18) of at least a part of a medical image (10),
- wherein said symbolic representation (18) comprises a directed graph comprising vertices and edges and having a non-cyclic structure, and
- wherein each pixel or voxel of the digital medical image (10) or at least said part of the medical image is associated with an edge or vertex of the graph (18),
- determine a path (24) in the symbolic representation (18), said path including an edge or vertex associated with a site (22) within an undesirable object (14) elected by user input and an edge or vertex outside said undesirable object, said path (24) propagating towards the root (20) of said directed graph (18),
- determine the part (25) of the image (10) associated with said determined path (24),
- identify a part of the image (10) associated with a branch (26) of said directed graph (18) rooted at a transition (16) between said undesired object and the remainder of the image (10), and either remove said identified part of the image (10) from the image (10) or remove anything but said identfied part of the image (10) from the image (10).

17. The computer program of claim 16, which when executed on a computer instructs a processor to display said determined part (25) of the image on a computer display, wherein said transition (16) is identified by user input.

18. The computer program of claim 16 or 17, wherein said undesirable object is a bone, an organ such as liver or kidney, or a metal artifact.

19. The computer program of one of claims 16 to 18, which when executed on a computer instructs a processor to perform a skeletonization of the medical image prior to generating said symbolic representation.

20. The computer program of one of claims 16 to 19, which when executed on a computer further instructs a processor to associate each voxel of the medical image (10) or at least said part of the medical image with the corresponding element of said directed graph (18) by means of a geodesic distance transform.

21. The computer program of one of claims 16 to 20, which when executed on a computer instructs a processor to perform a segmentation comprising a region growing process.

22. The computer program of one of claims 16 to 21, wherein said digital medical image is an angiogram.

23. The computer program of claim 22, wherein the root (20) of said directed graph (18) is located in the thickest vessel included in said angiogram (10).

24. The computer program of one of claims 16 to 23, which when executed on a computer instructs a processor to apply an automated bone removal method prior to generating said symbolic representation.

25. The computer program of one of claims 16 to 24, which when executed on a computer instructs a processor to generate said symbolic representation (18) in a growth process that is started at a seed site (20) and in which consecutively edges are generated, wherein the order in which edges are generated is based on the diameter of the part of the image (10) associated with the respective edge such that edges having larger corresponding diameters are generated first.

26. A workstation configured to
- generate a symbolic representation (18) of at least a part a medical image (10),
- wherein said symbolic representation (18) comprises a directed graph comprising vertices and edges and having a non-cyclic structure, and
- wherein each pixel or voxel of the digital medical image (10) or at least said part of the medical image is associated with an edge or vertex of the graph (18),
- determine a path (24) in the symbolic representation (18), said path (24) including an edge or vertex associated with a site (22) within an undesirable object (14) elected by user input and an edge or vertex outside said undesirable object, propagating towards the root (20) of said directed graph (18),
- determine the part (25) of the image (10) associated with said determined path (24),
- identify a part of the image (10) associated with a branch (26) of said directed graph (18) rooted at a transition (16) between said undesired object and the remainder of the image, and either remove said identified part of the image (10) or remove anything but said identified part of the image (10) from the image (10).

27. The workstation of claim 27, said work station being provided with a computer program according to one of claims 16 to 25.

## Patentansprüche

1. Verfahren zum Entfernen unerwünschter Objekte (14) aus einem digitalen medizinischen Bild (10), das die folgenden Schritte umfasst:
A) Auswählen einer in dem unerwünschten Objekt (14) liegenden Stelle (22) durch Eingabe eines Nutzers;
B) Erzeugen einer symbolischen Repräsentierung (18) zumindest eines Teils des medizinischen Bildes (10),
- wobei die symbolische Repräsentierung (18) einen gerichteten Graphen enthält, der Knoten ("vertices") und Kanten ("edges") enthält und eine nicht-zyklische Struktur aufweist,
- wobei ein jedes Pixel oder Voxel des digitalen medizinischen Bildes (10) oder zumindest des Teils des digitalen medizinischen Bildes mit einer Kante oder einem Knoten des Graphen assoziiert ist,
C) Ermitteln eines Pfades (24) in der symbolischen Repräsentierung (18), wobei der Pfad (24) die mit der ausgewählten Stelle (22) assoziierte Kante und eine Kante außerhalb des unerwünschten Objekts (14) enthält, wobei der Pfad in Richtung auf die Wurzel (20) des gerichteten Graphen (18) propagiert;
D) Ermitteln des Teiles (25) des Bildes (10), welcher mit dem ermittelten Pfad (24) assoziiert ist;
E) Identifizieren eines Übergangs (16) innerhalb des ermittelten Teiles (25) des Bildes (10) zwischen dem unerwünschten Objekt (14) und dem Rest (12) des Bildes (10);
F) Identifizieren des Teils des Bildes (10), der mit dem Ast (26) des Graphen (18) assoziiert ist, dessen Wurzel an dem Übergang (16) zwischen dem unerwünschten Objekt (14) und dem Rest (12) des Bildes (10) liegt, und Entfernen entweder des identifizierten Teils des Bildes (10) aus dem Bild (10) oder Entfernen von allem außer dem identifizierten Teil des Bildes (10) aus dem Bild (10).

2. Verfahren nach Anspruch 1, bei dem die Wurzel (20) des gerichteten Graphen nicht innerhalb des unerwünschten Objekts (14) liegt und in dem in Schritt F) der identifizierte Teil des Bildes (10) entfernt wird.

3. Verfahren nach Anspruch 1 oder 2, bei dem in Schritt D) der Teil (25) des Bildes (10), der mit dem ermittelten Pfad (24) assoziiert ist, visualisiert wird, und wobei in Schritt E) der Übergang (16) zwischen dem unerwünschten Objekt (14) und dem Rest (12) des Bildes (10) durch Nutzereingabe identifiziert wird.

4. Verfahren nach einem der vorhergehenden Ansprüche, bei dem das unerwünschte Objekt (14) ein Knochen, ein Organ wie beispielsweise die Leber oder Nieren oder ein Metall-Artefakt ist.

5. Verfahren nach einem der vorhergehenden Ansprüche, bei dem das digitale medizinische Bild (10) durch ein dreidimensionales Bilderfassungsverfahren erhalten wurde, und insbesondere durch Computer-Röntgentomographie (CT), beispielsweise Spiral-CT, oder Magnetresonanzbildgebung.

6. Verfahren nach einem der vorhergehenden Ansprüche, bei dem der Schritt A) des Auswählens der in dem unerwünschten Objekt (14) liegenden Stelle (22) und/oder Schritt E), in dem der Übergang (16) zwischen dem unerwünschten Objekt (14) und dem Rest (12) des Bildes identifiziert wird, mit Hilfe eines Nutzer-Zeigegerätes durchgeführt wird.

7. Verfahren nach einem der vorhergehenden Ansprüche, das ferner einen Schritt der Skelettierung des medizinischen Bildes (10) vor dem Schritt der Erzeugung der symbolischen Repräsentierung (18) enthält.

8. Verfahren nach einem der vorhergehenden Ansprüche, das ferner einen Schritt des Assoziierens eines jeden Voxels des medizinischen Bildes (10) oder zumindest des Teils des medizinischen Bildes mit dem korrespondierenden Element des gerichteten Graphen (18) durch geodätische Abstandstransformation ("geodesic distance transform") enthält.

9. Verfahren nach Anspruch 8, das ferner vor dem Schritt der Skelettierung einen Segmentierungsschritt umfasst, in dem ein von einem medizinischen Bildgebungsgerät erhaltenes Bild unterteilt wird in anzuzeigende Objekte und zu entfernende Objekte.

10. Verfahren nach Anspruch 9, bei dem der Segmentierungsschritt einen Bereichs-Wachstumsprozess ("region growing process") umfasst.

11. Verfahren nach Anspruch 10, bei dem die Wurzel (20) des gerichteten Graphen (18) der Saat ("seed") entspricht, die für das Bereichs-Wachstum ("region growing") verwendet wird.

12. Verfahren nach einem der vorhergehenden Ansprüche, bei dem das digitale medizinische Bild (10) ein Angiogramm ist.

13. Verfahren nach Anspruch 10, bei dem die Wurzel des gerichteten Graphen (18) im dicksten in dem Angiogramm enthaltenen Gefäß liegt.

14. Verfahren nach einem der vorhergehenden Ansprüche, bei dem die symbolische Repräsentierung (18) in einem Wachstumsprozess erzeugt wird, der an einer Saat-Stelle (20) ("seed site") beginnt und in welchem nachfolgend Kanten erzeugt werden, wobei die Reihenfolge, in der die Kanten erzeugt werden, auf dem Durchmesser des Teiles des Bildes basiert, der mit der jeweiligen Kante assoziiert ist, so dass Kanten mit gröβeren zugehörigen Durchmessern zuerst erzeugt werden.

15. Verfahren nach einem der vorhergehenden Ansprüche, das ferner vor dem Schritt des Erzeugens der symbolischen Repräsentierung einen Schritt umfasst, in dem ein automatisiertes Knochen-Entfernungsverfahren angewendet wird.

16. Computerprogramm, welches bei Ausführung auf einem Computer einen Prozessor instruiert
- eine symbolische Repräsentierung (18) zumindest eines Teils eines medizinischen Bildes (10) zu erzeugen,
- wobei die symbolische Repräsentierung (18) einen gerichteten Graphen umfasst, der Knoten ("vertices") und Kanten ("edges") umfasst und eine nicht-zyklische Struktur aufweist, und
- wobei ein jedes Pixel oder Voxel des digitalen medizinischen Bildes (10) oder zumindest des Teils des medizinischen Bildes mit einer Kante oder Knoten des Graphen (18) assoziiert ist,
- einen Pfad (24) in der symbolischen Repräsentierung (18) zu ermitteln, wobei der Pfad eine Kante oder einen Knoten umfasst, der mit einer Stelle (22) in einem unerwünschten Objekt (14) assoziiert ist, die durch Nutzereingabe ausgewählt wird, und eine Kante oder einen Knoten außerhalb des unerwünschten Objekts enthält, wobei der Pfad (24) in Richtung auf die Wurzel (20) des gerichteten Graphen (18) propagiert,
- den Teil (25) des Bildes (10) zu ermitteln, der mit dem ermittelten Pfad (24) assoziiert ist,
- einen Teil des Bildes (10) zu identifizieren, der mit einem Ast (26) des gerichteten Graphen (18) assoziiert ist, der an einem Übergang (16) zwischen dem unerwünschten Objekt und dem Rest des Bildes (10) seine Wurzel hat, und entweder den identifizierten Teil des Bildes (10) aus dem Bild (10) zu entfernen oder alles außer dem identifizierten Teil des Bildes (10) aus dem Bild (10) zu entfernen.

17. Computerprogramm nach Anspruch 16, welches bei Ausführung auf einem Computer einen Prozessor instruiert, den ermittelten Teil (25) des Bildes auf einem Computerbildschirm anzuzeigen, wobei der Übergang (16) durch Nutzereingabe identifiziert wird.

18. Computerprogramm nach Anspruch 16 oder 17, bei dem das unerwünschte Objekt ein Knochen, ein Organ wie beispielsweise Leber oder Nieren oder ein metallisches Artefakt ist.

19. Computerprogramm nach einem der Ansprüche 16 bis 18, welches bei Ausführung auf einem Computer einen Prozessor instruiert, eine Skelettierung des medizinischen Bildes vor der Erzeugung der symbolischen Repräsentation auszuführen.

20. Computerprogramm nach einem der Ansprüche 16 bis 19, welches bei Ausführung auf einem Computer einen Prozessor ferner instruiert, ein jedes Voxel des medizinischen Bildes (10) oder zumindest des Teils des medizinischen Bildes mit dem zugehörigen Element des gerichteten Graphen (18) durch eine geodätische Abstandstransformation ("geodesic distance transform") zu assoziieren.

21. Computerprogramm nach einem der Ansprüche 16 bis 20, welches bei Ausführung auf einem Computer einen Prozessor instruiert, eine Segmentierung durchzuführen, welche einen Bereichs-Wachstums-Prozess ("region growing process") umfasst.

22. Computerprogramm nach einem der Ansprüche 16 bis 21, bei dem das digitale medizinische Bild ein Angiogramm ist.

23. Computerprogramm nach Anspruch 22, bei dem die Wurzel (20) des gerichteten Graphen (18) in dem dicksten Gefäß des Angiogramms (10) liegt.

24. Computerprogramm nach einem der Ansprüche 16 bis 23, welches bei Ausführung auf einem Computer einen Prozessor instruiert, ein automatisiertes Knochen-Entfemungs-Verfahren vor Erzeugung der symbolischen Repräsentierung durchzuführen.

25. Computerprogramm nach einem der Ansprüche 16 bis 24, welches bei Ausführung auf einem Computer einen Prozessor instruiert, die symbolische Repräsentierung (18) in einem Wachstumsprozess zu erzeugen, der an einer Saatstelle (20) beginnt und in dem nachfolgend Kanten erzeugt werden, wobei die Reihenfolge, in der Kanten erzeugt werden, auf dem Durchmesser des Teils des Bildes (10) basiert, der mit der zugehörigen Kante assoziiert ist, so dass Kanten mit größeren zugehörigen Durchmessern zuerst erzeugt werden.

26. Workstation, die dazu konfiguriert ist,
- eine symbolische Repräsentierung (18) zumindest eines Teils eines medizinischen Bildes (10) zu erzeugen,
- wobei die symbolische Repräsentierung (18) einen gerichteten Graphen umfasst, der Knoten ("vertices") und Kanten ("edges") umfasst und eine nicht-zyklische Struktur aufweist, und - wobei ein jedes Pixel oder Voxel des digitalen medizinischen Bildes (10) oder zumindest des Teils des medizinischen Bildes mit einer Kante oder einem Knoten des Graphen (18) assoziiert ist,
- einen Pfad (24) in der symbolischen Repräsentierung (18) zu ermitteln, wobei der Pfad eine Kante oder einen Knoten enthält, der mit einer Stelle (22) in einem unerwünschten Objekt (14) assoziiert ist, die durch Nutzereingabe ausgewählt wird, und eine Kante oder einen Knoten außerhalb des unerwünschten Objekts enthält, wobei der Pfad (24) in Richtung auf die Wurzel (20) des gerichteten Graphen (18) propagiert,
- den Teil (25) des Bildes (10) zu ermitteln, der mit dem ermittelten Pfad (24) assoziiert ist,
- einen Teil des Bildes (10) zu identifizieren, der mit einem Ast (26) des gerichteten Graphen (18) assoziiert ist, der an einem Übergang (16) zwischen dem unerwünschten Objekt und dem Rest des Bildes (10) seine Wurzel hat, und entweder den identifizierten Teil des Bildes (10) aus dem Bild (10) zu entfernen oder alles außer dem identifizierten Teil des Bildes (10) aus dem Bild (10) zu entfernen.

27. Workstation nach Anspruch 26, die mit einem Computerprogramm nach einem der Ansprüche 16 bis 25 versehen ist.

## Revendications

1. Procédé pour supprimer des objets indésirables (14) dans une image numérique médicale (10), comprenant les étapes suivantes :
A) sélectionner, par une entrée d'utilisateur, un site (22) situé à l'intérieur de l'objet indésirable (14) ;
B) générer une représentation symbolique (18) d'au moins une partie de l'image médicale (10),
la représentation symbolique (18) comprenant un graphe orienté comprenant des sommets et des bords et ayant une structure non cyclique,
chaque pixel ou voxel de l'image numérique médicale (10) ou d'au moins ladite partie de l'image numérique médicale étant associé à un bord ou un sommet du graphe,
C) déterminer un chemin (24) dans la représentation symbolique (18), ledit chemin (24) comprenant le bord associé au site choisi (22) et un bord à l'extérieur de l'objet indésirable (14), ledit chemin se propageant vers la racine (20) du graphe orienté (18) ;
D) déterminer la partie (25) de l'image (10) associée au chemin (24) déterminé ;
E) identifier à l'intérieur de la partie déterminée (25) de l'image (10) une transition (16) entre l'objet non souhaité (14) et le reste (12) de l'image (10) ;
F) identifier la partie de l'image (10) associée à la branche (26) du graphe (18) prenant racine au niveau de la transition (16) entre l'objet non souhaité (14) et le reste (12) de l'image (10), et retirer de l'image (10) la partie identifiée de l'image (10) ou retirer de l'image (10) tout sauf la partie identifiée de l'image (10).

2. Procédé selon la revendication 1, dans lequel la racine (20) du graphe orienté n'est pas située à l'intérieur de l'objet indésirable (14) et dans lequel, dans l'étape F), la partie identifiée de l'image (10) est supprimée.

3. Procédé selon la revendication 1 ou 2, dans lequel, dans l'étape D), la partie (25) de l'image (10) associée au chemin (24) déterminé est visualisée, et dans lequel, dans l'étape E), la transition (16) entre l'objet non souhaité (14) et le reste (12) de l'image (10) est identifiée par une entrée d'utilisateur.

4. Procédé selon l'une quelconque des revendications précédentes, dans lequel l'objet indésirable (14) est un os, un organe tel que le foie ou les reins ou un artéfact métallique.

5. Procédé selon l'une quelconque des revendications précédentes, dans lequel l'image numérique médicale (10) est obtenue par un procédé d'acquisition d'image tridimensionnelle, et en particulier à partir de tomographie informatique par rayons X (CT), tel qu'une CT spirale, ou à partir d'imagerie par résonance magnétique.

6. Procédé selon l'une quelconque des revendications précédentes, dans lequel l'étape A) de sélection du site (22) situé à l'intérieur de l'objet indésirable (14) et/ou l'étape E) d'identification de la transition (16) entre l'objet indésirable (14) et le reste (12) de l'image (10) sont réalisées au moyen d'un dispositif de pointage d'un utilisateur.

7. Procédé selon l'une quelconque des revendications précédentes, comprenant en outre une étape de squelettisation de l'image médicale (10) avant l'étape de génération de la représentation symbolique (18).

8. Procédé selon l'une quelconque des revendications précédentes, comprenant en outre une étape consistant à associer chaque voxel de l'image médicale (10) ou d'au moins ladite partie de l'image médicale avec l'élément correspondant du graphe orienté (18) au moyen d'une transformation de distance géodésique.

9. Procédé selon la revendication 8, comprenant en outre, avant l'étape de squelettisation, une étape de segmentation consistant à diviser une image obtenue à partir d'un appareil d'imagerie médicale en objets à afficher et en objets à supprimer.

10. Procédé selon la revendication 9, dans lequel l'étape de segmentation comprend un processus de croissance de région.

11. Procédé selon la revendication 10, dans lequel la racine (20) du graphe orienté (18) correspond au germe utilisé pour la croissance de région.

12. Procédé selon l'une quelconque des revendications précédentes, dans lequel l'image numérique médicale (10) est une angiographie.

13. Procédé selon la revendication 10, dans lequel la racine du graphe orienté (18) est située dans le vaisseau le plus épais inclus dans l'angiographie.

14. Procédé selon l'une quelconque des revendications précédentes, dans lequel la représentation symbolique (18) est générée dans un processus de croissance qui est démarré au niveau d'un site germe (20) et dans lequel des bords consécutives sont générées, l'ordre dans lequel les bords sont générées étant basé sur le diamètre de la partie de l'image associée au bord respectif de sorte que les bords ayant les diamètres correspondants les plus grands sont générés en premier.

15. Procédé selon l'une quelconque des revendications précédentes, comprenant en outre, avant l'étape de génération de la représentation symbolique, une étape d'application d'un procédé de suppression d'os automatique.

16. Programme d'ordinateur qui, lorsqu'il est exécuté sur un ordinateur, donne instruction à un processeur de :
générer une représentation symbolique (18) d'au moins une partie d'une image médicale (10),
la représentation symbolique (18) comprenant un graphe orienté comprenant des sommets et des bords et ayant une structure non cyclique,
chaque pixel ou voxel de l'image numérique médicale (10) ou d'au moins ladite partie de l'image numérique médicale étant associé à un bord ou un sommet du graphe (18),
déterminer un chemin (24) dans la représentation symbolique (18), ledit chemin comprenant un bord ou un sommet associé à un site (22) à l'intérieur d'un objet indésirable (14) sélectionné par une entrée d'utilisateur et un bord ou un sommet à l'extérieur de l'objet indésirable, ledit chemin (24) se propageant vers la racine (20) du graphe orienté (18) ;
déterminer la partie (25) de l'image (10) associée au chemin (24) déterminé ;
identifier une partie de l'image (10) associée à une branche (26) du graphe orienté (18) prenant racine au niveau d'une transition (16) entre l'objet non souhaité et le reste de l'image (10), et retirer de l'image (10) la partie identifiée de l'image (10) ou retirer de l'image (10) tout sauf la partie identifiée de l'image (10).

17. Programme d'ordinateur selon la revendication 16, qui lorsqu'il est exécuté sur un ordinateur, donne instruction à un processeur d'afficher la partie déterminée (25) de l'image sur un afficheur d'ordinateur, dans lequel ladite transition (16) est identifiée par une entrée d'utilisateur.

18. Programme d'ordinateur selon les revendications 16 ou 17, dans lequel l'objet indésirable est un os, un organe tel qu'un foie ou un rein, ou un artéfact métallique.

19. Programme d'ordinateur selon l'une quelconque des revendications 16 à 18, qui lorsqu'il est exécuté sur un ordinateur donne instruction à un processeur de réaliser une squelettisation de l'image médicale avant de générer la représentation symbolique.

20. Programme d'ordinateur selon l'une quelconque des revendications 16 à 19, qui lorsqu'il est exécuté sur un ordinateur donne en outre instruction à un processeur d'associer chaque voxel de l'image médicale (10) ou d'au moins ladite partie de l'image médicale avec l'élément correspondant du graphe orienté (18) au moyen d'une transformation de distance géodésique.

21. Programme d'ordinateur selon l'une quelconque des revendications 16 à 20, qui lorsqu'il est exécuté sur un ordinateur, donne instruction à un processeur de réaliser une segmentation comprenant un processus de croissance de région.

22. Programme d'ordinateur selon l'une quelconque des revendications 16 à 21, dans lequel l'image numérique médicale est une angiographie.

23. Programme d'ordinateur selon la revendication 22, dans lequel la racine (20) du graphe orienté (18) est située dans le vaisseau le plus épais inclus dans l'angiographie (10).

24. Programme d'ordinateur selon l'une quelconque des revendications 16 à 23, qui lorsqu'il est exécuté sur un ordinateur, donne instruction à un processeur d'appliquer un procédé de suppression d'os automatique avant de générer la représentation symbolique.

25. Programme d'ordinateur selon l'une quelconque des revendications 16 à 24, qui lorsqu'il est exécuté sur un ordinateur donne instruction à un processeur de générer la représentation symbolique (18) dans un processus de croissance qui est démarré au niveau d'un site germe (20) et dans lequel des bords consécutifs sont générés, l'ordre dans lequel les bords sont générés étant basé sur le diamètre de la partie de l'image (10) associée au bord respectif de sorte que les bords ayant les diamètres correspondants les plus grands sont générés en premier.

26. Poste de travail agencé pour :
générer une représentation symbolique (18) d'au moins une partie d'une image médicale (10),
la représentation symbolique (18) comprenant un graphe orienté comprenant des sommets et des bords et ayant une structure non cyclique,
chaque pixel ou voxel de l'image numérique médicale (10) ou d'au moins ladite partie de l'image numérique médicale étant associé à un bord ou un sommet du graphe (18),
déterminer un chemin (24) dans la représentation symbolique (18), ledit chemin (24) comprenant un bord ou un sommet associé à un site (22) à l'intérieur d'un objet indésirable (14) sélectionné par une entrée d'utilisateur et un bord ou un sommet à l'extérieur de l'objet indésirable, se propageant vers la racine (20) du graphe orienté (18) ;
déterminer la partie (25) de l'image (10) associée au chemin (24) déterminé ;
identifier une partie de l'image (10) associée à une branche (26) du graphe orienté (18) prenant racine au niveau d'une transition (16) entre l'objet non souhaité et le reste de l'image (10), et retirer la partie identifiée de l'image (10) ou retirer de l'image (10) tout sauf la partie identifiée de l'image (10).

27. Poste de travail selon la revendication 27, le poste de travail étant muni d'un programme d'ordinateur selon l'une quelconque des revendications 16 à 25.
